# EUROPÄISCHE PATENTSCHRIFT

(11) **EP 3 995 106 B1**
(45) Veröffentlichungstag und Bekanntmachung des Hinweises auf die Patenterteilung: **02.10.2024**
(21) Anmeldenummer: 20206312.9
(22) Anmeldetag: 06.11.2020
(51) Int. Cl.: A61C 13/00, A61C 13/34

(54) **DENTALRONDEN-HALTERING**
DENTAL BLANK RETAINING RING
ANNEAU DE SUPPORT DE FLAN CIRCULAIRE DENTAIRE

(43) Veröffentlichungstag der Anmeldung: 11.05.2022
(73) Patentinhaber: Ivoclar Vivadent AG, 9494 Schaan (LI)
(72) Erfinder: LICHTENSTEIGER, Markus, 9462 Montlingen (CH)
(74) Vertreter: Baldus, Oliver

(56) Entgegenhaltungen:
- DE-U1- 202013 103 515
- DE-U1- 202017 006 526
- US-A1- 2018 236 620
- US-A9- 2017 333 168

## Beschreibung

Die Erfindung betrifft einen Dentalronden-Haltering, gemäß Anspruch 1.

Derartige Dentalronden-Halteringe und zugehörige Dentalroden sind seid langem bekannt. Dentalronden sind typischerweise flach zylinderförmig oder scheibenförmig und bestehen aus fräsbarem Material, das für die Herstellung von Dentalrestaurationsteilen geeignet ist.

Es wurde auch schon vorgeschlagen, einen derartigen Rohling mit einem Halterand zu versehen, der umlaufend ausgestaltet war und der Lagerung an einem Fräshalter diente. Ein derartiger Halterand konnte mittels eines Dentalklebers aufgebracht werden. Ein derartiger Rohling war für die Herstellung lediglich eines einzigen Dentalrestaurationsteils geeignet.

Seid mehreren Jahrzehnten sind aber auch Rohlinge in Form so genannter Denralronden bekannt, bei denen der Rohling im wesentlichen scheibenförmig ausgebildet ist und einen Durchmesser von etwa 10 cm hat, so dass zahlreiche Dentalrestaurationsteile aus einer derartigen Ronde hergestellt werden können.

Es wird aus dem Vollen gefräst, und die einzelnen Dentalrestaurationsteile sind mit Haltestegen mit dem Rohlingkörper der Dentalronde im Übrigen verbunden. Die fertig gefrästen Dentalrestaurationsteile werden aus dem skelettartigen Halbprodukt herausgebrochen und die Bruchstellen der Haltestege versäubert.

Um eine möglichst gute Materialausnutzung der Dentalronde zu gewährleisten, versucht man zum einen, die Anordnung der verschiedenen geformten Dentalrestaurationsteile auf der Dentalronde bereits virtuell, also vorab, zu optimieren. Zum anderen versucht man, möglichst randnah zu fräsen. Dem randnahen Fräsen sind jedoch Grenzen gesetzt aufgrund der erforderlichen Stabilität des verbleibenden Randes gegen die auftretenden Fräskräfte. Hier muss eine ausreichende Sicherheitsreserve bestehen, denn im Fall eines Bruchs sind typischerweise sämtliche zu erzeugende Dentalrestaurationsteile Ausschuss.

Die Materialien für Dentalrohlinge, zu denen auch die Dentalronden gehören, sind teilweise ausgesprochen teuer. Zu den fräsbaren Materialien gehören neben vergleichsweise preisgünstigem Wachs oder PMMA nämlich auch Materialien wie ZrO2, Titan oder Ko-Cr.

Während ein aufgeklebter Ringrand zu Einsparungen hinsichtlich der Menge der Dentalmaterialien führen kann, wird heutzutage typischerweise der Ringrand einstückig angeformt. Dies hat den gewissen Vorteil, dass die Dentalronde randseitig noch etwas nachstabilisiert wird, so dass man näher an den Rand heran fräsen kann.

Die bislang bekannten Dentalronden haben den Nachteil, dass ein vergleichsweise breiter nicht fräsbarer Rand bleiben muss, um die Stabilität des Rohlings während des Fräsens nicht zu beeinträchtigen. Auch bereits bekannte Haltevorrichtung für Dentalrohlinge, wie sie beispielsweise aus der Druckschrift US 2017/333168 A9 oder der Druckschrift DE 20 2017 006526 U1 bekannt sind, können die oben genannten Nachteile nicht beheben.

Demgegenüber liegt der Erfindung die Aufgabe zugrunde, einen Dentalronden-Haltering gemäß Anspruch 1 zu schaffen. Eine Dentalronde und einen Dentalronden-Haltering zu schaffen sind auch offenbart, die eine bessere Ausnutzung des zur Verfügung gestellten Materials der Dentalrestauration erlauben, ohne dass die Bruchgefahr der im Fräsen begriffenen Dentalronde steigt.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, die Dentalronde in einem Dentalronden-Haltering elastisch zu lagern. Die durch die Fräsmaschine eingeleiteten Erschütterungen und Beanspruchungen des vergleichsweise spröden Keramikmaterials der Dentalronde werden durch das weichere Lagerungsmaterial sanft aufgefangen. Dies führt überraschend dazu, dass das Fräsen auch mit einem kleineren verbleibenden Freirand möglich ist, also einem Rand, an dem nicht gefräst wird.

Es besteht die Vermutung, dass durch harte Schwingungen, die durch das rotierende Fräswerkzeug auf das spröde Keramikmaterial der Dentalronde eingeleitet wird, die Bruchneigung drastisch steigt. Demgegenüber versucht die erfindungsgemäße Lösung, die eingeleiteten Spannungsspitzen zu vergleichmäßigen und zu glätten, so dass zwar über das Zeitintegral betrachtet keine größere oder kleinere Spannungsbeaufschlagung vorliegt.

Diese wird vielmehr so beeinflusst, dass die Schwingungen in ihren Spannungsspitzen gedämpft werden. Dies führt dazu, das die größten Spannungsspitzen, die in den verbleibenden Stabilisierungsrand, auch Reinwand genannt, der halb gefrästen Dentalronde eingeleitet werden, gleichsam abgeschliffen werden.

Durch den erfindungsgemäßen Haltering wird die Dentalronde zudem unter Vorspannung, also unter Druck, gehalten.

Im Zusammenhang mit der Erfindung vorgenommene Untersuchung haben jedenfalls ergeben, dass die Bruchneigung der Dentalronde als Halbprodukt mit der erfindungsgemäßen Ausgestaltung sinkt.

Besonders günstig ist es, wenn der Haltering im Querschnitt C-förmig ausgestaltet ist und das weichere Material des Halterings oder die weichere Komponente des Halterings die Dentalronde nicht nur in Umfangsrichtung, sondern auch an den Scheibenflächen umgibt und eingespannt hält. Hierzu weist das C-Profil an der Innenseite des C je die weichere Komponente auf.

Besonders vorteilhaft ist es, dass Haltering, der entweder in C-Form oder in L-Formvorliegt, unabhängig davon, ob der Haltering einteilig oder zweiteilig ist, eine Montagehilfe gleichsam automatisch zur Verfügung stellt.

Wenn der Haltering in zweiteiliger C-Form vorliegt, bildet der untere Teil gleichsam ebenfalls ein L, und in diesen Teil kann dann die Ronde eingelegt werden, so dass er unter Bildung eines Anschlags eine Montagehilfe bildet.

In beiden Fällen bildet der untere Endschenkel einen Anschlag für die Festlegung der Höhenlage der Dentalronde, wenn die Anlage zwischen Ronde und Endschenkel erreicht ist. Hierdurch wird die Höhenlage der Ronde fixiert.

Das Einführen der Ronde in den Haltering bzw. deren Fixierung ist positionsgenau durchführbar. Durch die Einspannung des Halterings am Fräshalter und die Anlage zwischen Haltering und Ronde entsteht eine genauere Positionsfestlegung, die dazu beiträgt, das teure Keramikmaterial der Ronde besser auszunutzen, denn die Freiränder der Ronde, also die Bereiche der Ronde, die aus Stabilitätsgründen ungefräst verbleiben müssen, können so gering wie möglich gehalten werden.

Die weichere Komponente ist an der härteren Komponente des Halterings angebracht werden.

Der Haltering wird zunächst vollständig gefertigt, also aus der weicheren Komponente und der härteren Komponente hergestellt.

Hieran anschließend wird die Dentalronde an dem Haltering eingespannt, und zwar bevorzugt so, dass die Dentalronde durch die Lagerung an dem Haltering nicht nur lose gehalten ist, sondern eingespannt fixiert ist.

In vorteilhafter Ausgestaltung der Erfindung ist zur Einspannung ein ringförmiger Haltevorsprung vorgesehen, der sich radial außen am Haltering erstreckt und eine Hinterschneidung bildet. Dieser lässt sich an der Werkstückaufnahme der Fräsmaschine, dem Spannhalter, einspannen und damit fixieren.

Mit "eingespannt" ist hier gemeint, dass durch die Lagerung Vorspannungen vom Haltering, insbesondere von dessen härtere Komponente, auf die Dentalronde eingeleitet werden. Dies gilt insbesondere für die radiale Richtung der Dentalronde, aber auch für die achsparallele Richtung.

Die Dentalronde ist bevorzugt flachzylindrisch, also in Form einer kreisförmigen Scheibe. Sie ist an dem Haltering so eingespannt gehalten, dass vom Haltering auf die Dentalronde sowohl radial einwärts weisende Kräfte ausgeübt werden, als auch achsparallele Kräfte, bezogen auf die Mittelachse der Dentalronde. Hierzu weist der Haltering sowohl in seinem Innendurchmesser an dem Mittelschenkel des C als auch an dem Abstand zwischen den Innenflächen der Seitenschenkel geringere Abmessungen auf, als die Dentalronde, also am Umfang der Dentalronde und in der Höhe der Dentalronde.

Der jeweilige Abstandsunterschied kann beispielsweise 0,1 oder 0,2 mm betragen. Die Dicke oder Schichtstärke der weicheren Komponente kann beispielsweise 0,5 bis 1 mm betragen.

Die weichere Komponente des Halterings wird durch diese Bemessungen um das Unterschiedsmaß zwischen den Abmessungen der Dentalronde außen und des Halterings innen komprimiert und übt dementsprechend Kräfte sowohl in achsparaleller Richtung als auch in radialer Richtung aus.

Besonders bevorzugt ist es, dass ein eine Hinterschneidung bildender Haltevorsprung, insbesondere ein Schwalbenschwanzprofil oder ein anderes Formschlussprofil, gegenüber einem Spannhalter einer Fräsmaschine ein Übermaß aufweist und die weichere Komponente an einem die Hinterschneidung bildenden Haltevorsprung beim Einspannen in den Spannhalter zusammendrückbar ist.

Damit ist automatisch eine kraft- und formschlüssige Verbindung gewährleistet.

Während in vorteilhafter Ausgestaltung der Haltering zweiteilig aus zwei im Querschnitt L-förmigen Teilen aufgebaut ist, die aufeinander zu gespannt gehalten sind, ist auch eine einstückige Ausgestaltung möglich.

Der Haltering hat einen vertikalen Schlitz oder eine vertikale Trennfuge. Diese kann zusätzlich zu der horizontalen Trennebene oder anstelle dieser vorgesehen sein.

Der Schlitz trennt den Haltering an einer Stelle auf. Der Haltering ist damit aufspreizbar, um die Ronde leichter einführen zu können.

Wesentlich ist es jedenfalls, dass die härtere Komponente die weichere übergreift. Mit "Übergreifen" ist nicht nur ein eindimensionales Übergreifen gemeint, also, dass sich die härtere Komponente radial außerhalb der weicheren Komponente erstreckt, sondern ein zweidimensionales Übergreifen, also dass in mindestens zwei Raumrichtungen die härtere Komponente weiter von der Dentalronde beanstandet ist als wie weichere Komponente.

Damit ist es möglich, eine Lagerung der Dentalronde an dem erfindungsgemäßen Dentalronden-Haltering so sicherzustellen, dass die eingeleiteten Fräskräfte, die ja auch in mehr als einer Raumrichtung wirken, in mindestens zwei voneinander unterschiedlichen und insbesondere zueinander orthogonalen Raumrichtungen weich aufgefangen werden.

Mit "Übergreifen" ist auch ein Lagern und Abstützen in mindestens zwei Raumrichtungen gemeint, bevorzugt hierbei so, dass eine Fixierung in beiden Raumrichtungen stattfindet, also eine beidseitige Anlage gewährleistet ist. Erfindungsgemäß besonders günstig ist es, wenn eine Fläche des Halterings, die in eine Raumrichtung weist, also beispielsweise die radial einwärts weisende Fläche des Halterings, oder die Innenfläche eines Endschenkels des Halterings, an eine weitere Fläche angrenzt, die sich rechtwinklig zu dieser Fläche erstreckt und ebenfalls mit der weicheren Komponente versehen ist. Damit ist es sicher gestellt, dass eine zweidimensionale weiche Lagerung realisiert ist.

Bevorzugt sind sowohl die Innenfläche des Mittelschenkels des C des Halterings als auch die Innenflächen der Endschenkel des C des Halterings mit der weicheren Komponente versehen.

In einer weiteren vorteilhaften Ausgestaltung ist es vorgesehen, den Haltering im Profil L-förmig auszubilden. Ein Formschlussprofil für die Lagerung im Fräshalter ist bei dieser Ausführungsfom radial außen einstückig mit dem vertikalen, längeren Schenkel des L angeformt.

Der kürzere Schenkel des L erstreckt sich radial einwärts, entsprechend dem unteren Endschenkel eines C-Profils.

Die Dentalronde lässt sich in den Haltering, der auch als Montagehilfe dient, einlegen. Der untere Schenkel dient hierbei als Anschlag und Montagehilfe für die Dentalronde. Bevorzugt ist an der Innenecke am Übergang zwischen den beiden Schenkeln des L eine Nut vorgesehen, die als Kantenschutz für eine aus Keramik bestehende Ronde dient,
Der vertikale L-Schenkel überragt die Dentalronde bevorzugt um weniges. An dieser Stelle kann auch ein Deckel angelenkt sein.

Das L-Profil ist bevorzugt innen mit der weicheren Komponente ausgekleidet. Auch hier kann die weichere Komponente auch nur in Teilbereichen vorgesehen sein, die in Umfangsrichtung betrachtet voneinander beabstandet sind.

Erfindungsgemäß ist es vorgesehen, dass der Haltering aus zwei unterschiedlichen Komponente besteht, die unterschiedliche Materialeigenschaften haben. Die "innere" Komponente ist weicher und die "äußere" Komponente ist härter.

Die Herstellung erfolgt bevorzugt so, dass beide Komponente zusammen zur Bildung des Halterings in dem an sich bekannten Mehrkomponentenspritzgießverfahren hergestellt werden.

Es ist nicht ausgeschlossen, dass anstelle der hier genannten zwei Komponenten auch weitere Komponenten zum Einsatz gelangen. Beispielsweise kann eine dritte noch weichere Komponente als Zusatzschicht auf der weicheren Komponente aufgebracht sein.

Die weiche Komponente ist bevorzugt ein Kunststoff mit gummielastischen Eigenschaften, wie ein thermoplastisches Elastomer, insbesondere mit einer Shore-Härte zwischen 30A und 70A.

Ein weiterer, besonders günstiger Gesichtspunkt ist es, dass durch die erfindungsgemäße weichere Komponente des Halterings auch Fertigungstoleranzen von Dentalronden unterschiedlicher Provenienzen kompensiert werden.

Besonders günstig ist es, dass kein Dentalkleber erforderlich ist, um den Haltering auf der Dentalronde zu befestigen. Hierdurch ist die erfindungsgemäße Lösung alterungsbeständig.

In weiterer vorteilhafter Ausgestaltung ist es vorgesehen, dass die Komponenten mittels eines Laser-Schweißverfahrens bei der Montage angeschmolzen werden, um sich mit der Dentalronde zu verbinden.

Dies ermöglicht einen Stoffschluss zwischen einer Dentalronde, die beispielsweise aus PMMA, Keramiken, Kobaltchrom oder auch aus Wachs bestehen kann, und dem Haltering.

In weiterer vorteilhafter Ausgestaltung ist es vorgesehen, dass ein Deckel für die Dentalronde an dem Haltering angelenkt ist und sich über die frei liegende Scheibenfläche der Dentalronde erstreckt. Der Deckel kann über ein Filmscharnier mit dem Haltering verbunden sein und kann auch die gesamte Oberseite der Dentalronde abdecken.

Der Deckel kann auch an der Unterseite der Dentalronde in gleicher Weise vorgesehen sein, so dass beide Deckel zusammen mit dem Haltering eine Verpackung für die Dentalronde bilden.

Der Deckel kann auch so ausgestaltet sein, dass ein Bereich des Übergangs zwischen dem Deckel und dem Haltering als Gelenk ausgebildet ist, während der übrige Bereich trennbar ist, so dass der Deckel an dem so gebildeten Gelenk aufklappbar ist.

Erfindungsgemäß weist der Haltering eine Trennebene auf, an der er trennbar ist. Die Trennebene erstreckt sich horizontal, bevorzugt etwa mittig durch die Dentalronde.

Die Oberseite der Dentalronde wird damit von dem oberen Endschenkel des Halterings übergriffen, und die Unterseite der Dentalronde von dem unteren Endschenkel. Der Mittelschenkel ist insofern geteilt.

Dennoch ist bevorzugt an allen einwärts weisenden Teilen des Halterings die weichere Komponente vorgesehen, so dass auch bei dieser Ausführungsform eine weiche Lagerung der Dentalronde an dem Haltering möglich ist.

In weiterer vorteilhafter Ausgestaltung ist radial außen an dem Haltering ein Formschlussprofil, insbesondere ein Schwalbenschwanzprofil, vorgesehen. Ein solches, bspw. ein Schwalbenschwanzprofil, ist besonders geeignet, die Dentalronde zusammen mit dem Haltering an einer Maschinenaufnahme, auch Fräshalter genannt, einer Dentalfräsmaschine eingespannt zu halten Das Profil weist eine Hinterschneidung auf.

Wenn eine zweiteilige Ausgestaltung mit Trennebene des Halterings vorgesehen ist, ist das beispielhafte Schwalbenschwanzprofil durch die Trennebene vertikal geteilt.

Diese Ausgestaltung bietet den besonderen Vorteil, dass durch das "Zupacken" der Fräsmaschine das Schwalbenschwanzprofil und damit zugleich die beiden Teile des Halterings zusammengedrückt werden. Hierdurch wird dann eine vertikale Kraft sowohl von unten als auch von oben auf die Dentalronde über die Endschenkel des Halterings ausgeübt, die der Einspannung dient.

In weiterer bevorzugter Ausgestaltung ist es vorgesehen, dass die weiche Komponente sich nicht kreisringförmig, sondern nur abschnittsweise innen an dem Haltering erstreckt. Dies reicht für die erwünschte spannungsspitzenreduzierende Lagerung aus. Hierdurch lässt sich Material und Gewicht einsparen.

Gemäß einem weiteren Aspekt der Erfindung ist es vorgesehen, den Dentalronden-Haltering und die Dentalronde so auszubilden, dass der Querschnitt eines Aufnahmebereichs der Halterings ein C-Profil mit aufeinander zu weisenden Endschenkeln ausbildet.

Gemäß einem zweiten Aspekt der Erfindung ist es bevorzugt, dass ein Endschenkel des C eine Referenzfläche und ein anderer Endschenkel des C - zusammen mit dem einen Endschenkel - eine Klemmvorrichtung bildet, mittels welcher der Bereich die Dentalronde in mindestens 2 Raumrichtungen formschlüssig fräsfest und insbesondere bis 100 N belastbar einspannbar ist. Gemäß einem weiteren Aspekt der Erfindung ist es bevorzugt, dass die Einheit aus Dentalronden-Haltering und Dentalronde ein Etikett, insbesondere mit QR-Code, oder einen Chip, insbesondere einen RFID-Chip, trägt, das oder der Kalibrierinformationen über die Dentalronde und die Einheit aufweist.

Weitere Vorteile, Einzelheiten und Merkmale ergeben sich aus der nachstehenden Beschreibung mehrerer Ausführungsbeispiele der Erfindung anhand der Zeichnung.

Es zeigen:
- Fig. 1: eine schematische perspektivische Schnittansicht einer Ausführungsform einer erfindungsgemäßen Dentalronde mit dem integrierten Dentalronden-Haltering;
- Fig. 2: ein vergrößerter Ausschnitt aus Fig. 1;
- Fig. 3: eine schematische Ansicht einer weiteren Ausführungsform eines erfindungsgemäßen Dentalronden-Halterings;
- Fig. 4: eine schematische Ansicht einer weiteren Ausführungsform der erfindungsgemäßen Dentalronde mit dem Dentalronden-Haltering, oder Darstellung des Herstellungsprinzips;
- Fig. 5: eine perspektivische Ansicht der Ausführungsform der erfindungsgemäßen Dentalronde mit dem Dentalronden-Haltering gemäß Fig. 1, unter Darstellung des Dentalronden-Halterings mit Deckel;
- Fig. 6: eine perspektivische Ansicht einer weiteren Ausführungsform der erfindungsgemäßen Dentalronde mit dem Dentalronden-Haltering, unter Verwendung eines Dentalronden-Halterings ohne Deckel; und

- Fig. 7: eine schematische perspektivische Ausschnitt-Ansicht einer Ausführungsform einer erfindungsgemäßen Dentalronde mit dem integrierten Dentalronden-Haltering;
- Fig. 8: eine schematische Schnittansicht zur Verdeutlichung einer Modifikation der Ausführungsform gemäß Fig. 2 oder gemäß Fig. 7, zur Darstellung des Formschlussprofils;
- Fig. 9: eine weitere Modifikation der Darstellung gemäß Fig. 8;
- Fig. 10: eine weitere Modifikation der Darstellung gemäß den Fig. 8 und 9;
- Fig. 11: eine modifizierte Darstellung eines Dentalronden-Halterings, unter Bereitstellung alternativer Formschlussprofile, die nicht Teil der Erfindung sind.
- Fig. 12: eine schematische Darstellung einer Ausführungsform eines Fräshalters, des Dentalronden-Halterings sowie eines Dentalronden-Wechslers, in auszugsweiser Darstellung; die nicht Teil der Erfindung ist.
- Fig. 13: eine Schnittansicht zu der Ausführungsform gemäß Fig. 12; und
- Fig. 14: eine modifizierte Ausführungsform zu der Darstellung gemäß Fig. 12.

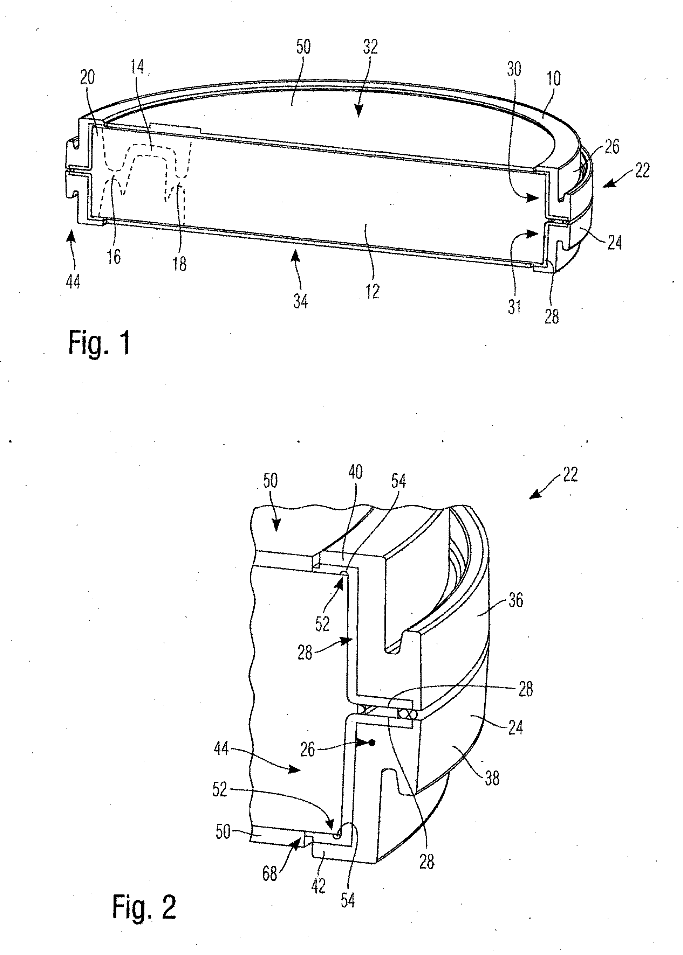

Gemäß Fig. 1 ist ein kreisringförmiger Dentalronden-Haltering 10 an einer Dentalronde 12 angebracht. In den dargestellten Ausführungsbeispiel besteht die Dentalronde 12 aus einer Dentalkeramik und ist als Rohling für ein Dentalrestaurationsteil 14 oder mehrere Dentalrestaurationsteile bestimmt.

Die Dentalrestaurationsteile werden in an sich bekannter Weise aus der Dentalronde 12 gefräst.

Ein derartiges Dentalrestaurationsteil 14 ist in Fig. 1 gestrichelt angedeutet. Das Dentalrestaurationsteil 14 ist in ebenfalls an sich bekannter Weise über Haltestege 16 und 18 mit der gefrästen Dentralronde 12 verbunden. Die Haltestege 16 und 18 ermöglichen das Fräsen des Dentalrestaurationsteils 14.

Nach Abschluss des Fräsvorgangs und gegebenenfalls eines Poliervorgangs wird das Dentalrestaurationsteil 14 in an sich bekannter Weise aus der Dentalronde 12 herausgebrochen.

Zum Dentalroden-Haltering 10 besteht ein Freirand 20, dessen Größe und Stärke materialabhängig ist. Über den Freirand 20 wird die Verbindung zum Dentalronden-Haltering 10 hergestellt, der seinerseits in einen Fräshalter eingespannt ist. Der Fräshalter ist nicht dargestellt und kann beispielsweise kreisringförmig sein, so dass der Dentalronden-Haltering 10 genau in den Fräshalter hinein passt.

Zur Lagerung weist der Dentalronden-Haltering 10 einen Haltevorsprung 22 auf, der im Beispielsfall als Schwalbenschwanzprofil 24 ausgebildet ist und somit als Formschlussprofil mit einem Fräshalter agiert.

Erfindungsgemäß ist es vorgesehen, dass der Haltering 10 aus zwei Komponenten besteht, nämlich einer härteren Komponente 26 und einer weicheren Komponente 28. Die härtere Komponente 26 bildet gleichsam das "Rückgrat" des Halterings 10.

Der Haltering 10 ist im Querschnitt C-förmig. An seiner Innenseite 30 ist er mit der weicheren Komponente 28 versehen. An dieser Seite ist die weichere Komponente 28 in dem dargestellten Ausführungsbeispiel als gleichmäßige Schicht umlaufend ausgebildet. Dementsprechend liegt sie sowohl an der Oberseite 32 der Dentalronde 12 als auch an der Unterseite 34 der Dentalronde 12 an, und zwar dem Umfang der Dentalronde 12 benachbart, nämlich am äußeren Teil des Freirandes 20.

Der Haltering 10 bildet an seiner Innenseite 30 insofern einen Aufnahmebereich 31 aus. Dieser dient dazu, die Dentalronde 12 aufzunehmen und sicher zu lagern. Der Haltering 10 übergreift mit seinem Aufnahmebereich 31 die Ronde und lagert sie und stützt sie in mehrere Raumrichtungen, nämlich in 4 horizontale und 2 vertikale Richtungen, gegen Fräskräfte ab.

Ferner liegt die weichere Komponente 28 am Umfang der Dentalronde 12 vollflächig an. Die Dentalronde 12 ist eine flach zylindrische Scheibe. Durch das Zusammenwirken der härteren Komponente 26 und der weicheren Komponente 28 mit einem geringen Übermaß der Dentalronde 12 gegenüber dem Haltering 10 ist die Dentalronde 12 spielfrei und eingespannt in dem Haltering 10 gelagert.

Aus Fig. 2 ist ein Teil der Lagerung gemäß Fig. 1 in vergrößerte Darstellung ersichtlich. Der Haltering 10 ist zweiteilig ausgebildet und besteht aus einem oberen Teil 36 und einem unteren Teil 38. Zwischen dem oberen Teil 36 und dem unteren Teil 38 erstreckt sich ebenfalls die weichere Komponente 28.

Der Haltevorsprung 22 wird von dem Fräshalter übergriffen. Dieser ist so ausgebildet, dass er an dieser Stelle die beiden Hälften des Schwalbenschwanzprofils 24 aufeinander zu drücken kann. Hierdurch wird die weichere Komponente 28 zwischen den beiden Teilen 36 und 38 komprimiert. Zugleich wird Druckkraft an den Endschenkeln 40 und 42 des C-Profils 44 des Halterings 10 ausgeübt, und durch die Bewegung der Endschenkel 40 und 42 aufeinander zu wird die weichere Komponente 28 an dieser Stelle komprimiert, so dass die Haltekraft gegenüber der Dentalronde 12 verbessert ist.

In dem dargestellten Ausführungsbeispiel weist der Haltering 10 einen Deckel 50 auf. Der Deckel 50 ist sowohl an der Oberseite 32 als auch an der Unterseite 34 vorgesehen und erstreckt sich über die Dentalronde 12. Hierdurch ist gleichzeitig eine beschädigungssichere Verpackung der Dentalronde 12 gegeben.

Der Deckel 50 ist über die weichere Komponente 28 mit dem Haltering 10 im Übrigen verbunden.

Die Innenecken 52 des C-Profils 44 weisen eine Nut 54 auf. Diese dient dazu, die empfindlichen Kanten der aus Keramik bestehenden Dentalronde 12 zu schützen. Wenn lediglich eine Nut 54 als Kantenschutz an der Bruchkante einer Keramik-Dentalronde vorgesehen ist, ist es bevorzugt, diese unten zu realisieren, also abgewandt von der Primärseite, an der das Fräswerkzeug ansetzt.

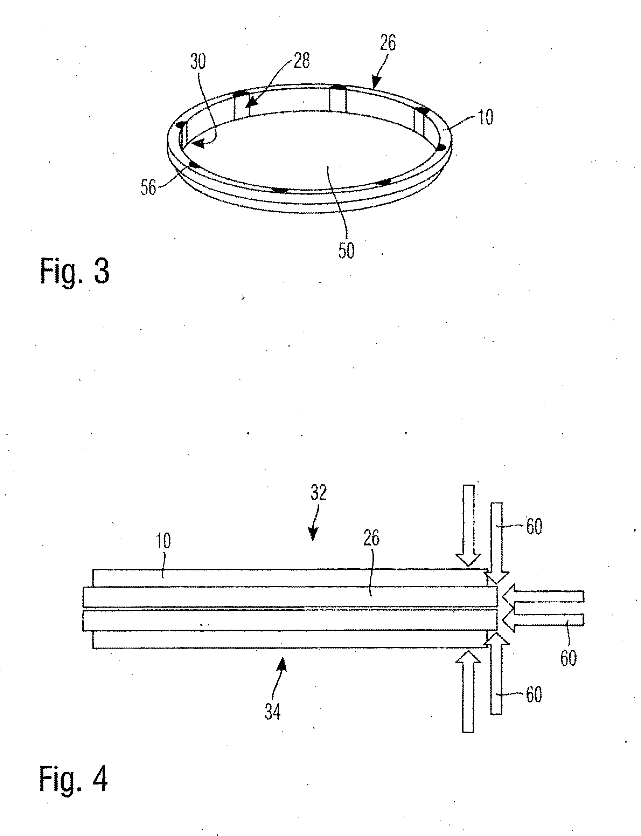

Aus Fig. 3 ist eine weitere Ausführungsform eines erfindungsgemäßen Dentalronden-Halterings 10 ersichtlich.

Gemäß der perspektivischen Darstellung besteht der Haltering 10 aus der härteren Komponente 26 und der weicheren Komponente 28. Bei dieser Ausführungsform ist die weichere Komponente 28 jedoch nicht als umlaufende Schicht realisiert, sondern lediglich bereichsweise, in der dargestellten Ausführungsform 8 ringsum verteilten Bereichen 56, die der Abstützung der Denralronde 12 mit dienen.

Der Haltering 10 dient hier als Montagehilfe, wobei die Ronde in den Haltering 10 i. V. m. der weicheren Komponente zur Bereitstellung der Postiongstreue eingeführt bzw. dort unter Verwendung der betreffenden Bereich des Halterings als Anschlag positioniert werden kann.

Aus Fig. 4 ist ersichtlich, in welcher beispielhaften Weise der erfindungsgemäße Dentalronden-Haltering 10 mit der Dentalronde 12 verbunden werden kann. In dem dargestellten Ausführungsbeispiel ist die härtere Komponente 26 des Halterings 10 durchlässig für Laserstrahlung 60 einer vorgegebenen Wellenlänge, von beispielsweise 1500 nm. Die weichere Komponente 28, die aus Fig. 4 nicht ersichtlich ist, ist demgegenüber absorbierend bei dieser Wellenlänge.

Alternativ ist es möglich, Ultraschallschweißen einzusetzen, um die Verbindung zwischen Haltering 10 und Dentalronde 12 herzustellen.

Es wird Laserstrahlung 60 sowohl in achsparalleler Richtung von der Oberseite 32 als auch von der Unterseite 34 aufgebracht, und zudem radial einwärts. Durch die Laserstrahlung 60 schmilzt die weichere Komponente 28 oder schmilzt zumindest an. Die Lagerung der Dentalronde 12 in dem Haltering 10 ist dann zusätzlich auch stoffschlüssig.

Es ist aber auch möglich, mit der lediglich kraftschlüssigen und formschlüssigen Lagerung der Dentalronden 12 in dem Haltering 10 gemäß den Ausführungsformen gemäß den Fig. 1 bis 3 auszukommen.

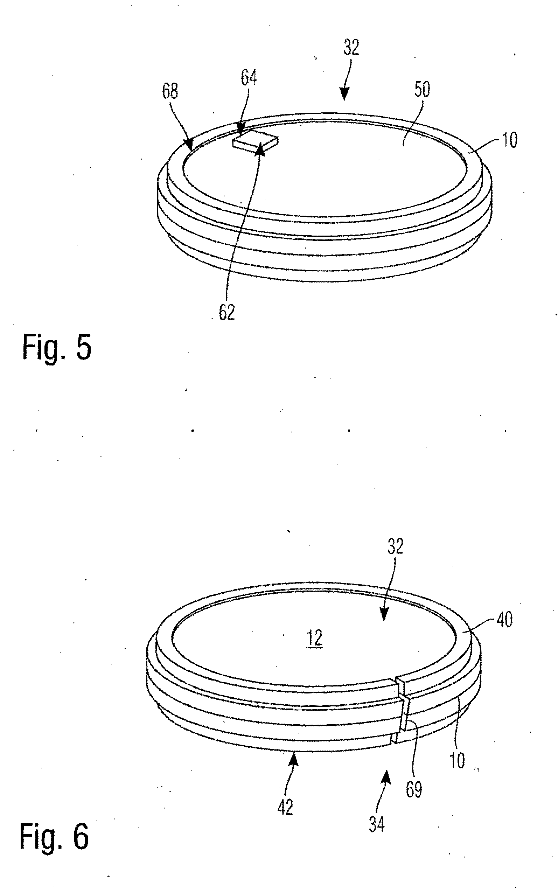

Aus Fig. 5 ist ersichtlich, in welcher Weise der Deckel 50 sich über die Oberseite 32 der Dentalronde 12 erstrecken kann. Der Deckel 50 weist in dem dargestellten Ausführungsbeispiel eine Abziehlasche 62 auf, die ihrerseits aufklappbar ist und hierzu mit einem Filmscharnier 64 mit dem Deckel 50 verbunden ist.

Bei Zug an der Abziehlasche 62 trennt sich der Deckel 50 von dem Haltering 10 an dem Übergang über die dort dünne weichere Komponente 28. Dieser Übergang bildet insofern eine Sollbruchstelle 68, die ein leichtes Entfernen des Deckels 50 erlaubt.

Bevorzugt besteht die weichere Komponente 28 aus einem thermoplastischen Elastomer oder sonstigen gummiartigen Kunststoff und hat eine Shorehärte A zwischen 40 und 60.

Aus Fig. 6 ist ersichtlich, in welcher Weise sich die Dentalronde 12 mit dem Haltering 10 im fräsfertigen Zustand darstellt. Die Oberseite 32 ist frei zugänglich, aber die Dentalronde 12 mindestens kraftschlüssig und formschlüssig vom Haltering 10 umgeben.

Bei der Ausführungsform gemäß Fig. 4 ist zusätzlich eine stoffschlüssige Verbindung gegeben.

Die härtere Komponente 26 ist weicher als Keramik und damit als die Dentalronde 12. Damit sind die Endschenkel 40 und 42 des Halterings 10 auch ohne weiteres teilweise wegfräsbar.

Bevorzugt besteht sowohl die weichere Komponente 28 als auch die härtere Komponente 26 aus einem fräsbaren Material.

Der erfindungsgemäße Haltering 10 stellt eine ausgesprochen gute Lagerung der Dentalronde 12 auch bei teilweggefrästem Haltering 10 sicher. Die verbleibenden, also nicht weggefrästen Teile der Endschenkel 40 und 42 stellen dennoch eine ausreichende Lagerung in vertikaler Richtung, der sogenannten Z-Richtung, sicher.

Nachdem der Haltering 10 die Dentalronde 12 auch in axialer Richtung eingespannt hält, wird die Dentalronde 12 axial unter Druck gesetzt.

Bekanntlich ist Keramik wesentlich druckfester als zugfester, so dass durch diese Zusatzspannung der Freirand 20 kleiner gewählt sein kann als bei den bislang bekannten Lösungen.

Erfindungsgemäß ist es besonders günstig, das sich somit eine integrierte Verpackung realisieren lässt. Die Montage und Handhabung der Dentalronde 12 an dem Fräshalter, aber auch im Übrigen ist vereinfacht und sicherer, da der erfindungsgemäße Dentalronden-Haltering 10 zugleich einen Kantenschutz für die empfindlichen Keramik-Denralronden 12 bildet.

Ferner ist auch ein gewisser Toleranzausgleich möglich, denn durch die Realisierung der Schicht aus der weicheren Komponente 28 ist auch eine sichere Aufnahme bei Herstelltoleranzen möglich.

Insgesamt lassen sich die zu bearbeitenden Materialien besser ausnutzen, was auch zur Zeiteinsparung beim Endverbraucher führt. Dadurch, dass in den Haltering 10 hinein gefräst werden kann, lässt sich auch ein größerer Nestingbereich bei der Anordnung von Dentalrestaurationen 14 in der dem Rohling bildenden Dentalronde 12 realisieren.

Ferner ist aus Fig. 6 ein Schlitz 69 oder eine vertikal sich erstreckende Trennfuge ersichtlich. An dieser Stelle ist der Haltering 10 etwas aufspreizbar, z.B. um 20 % seines Durchmessers. Dieses Aufspreizen reicht aus, um die Dentalronde 12 in den Haltering 10 einzuführen. Nach dem Loslassen nimmt der Haltering 10 wieder die in Fig. 6 dargestellte, nahezu geschlossene Position ein.

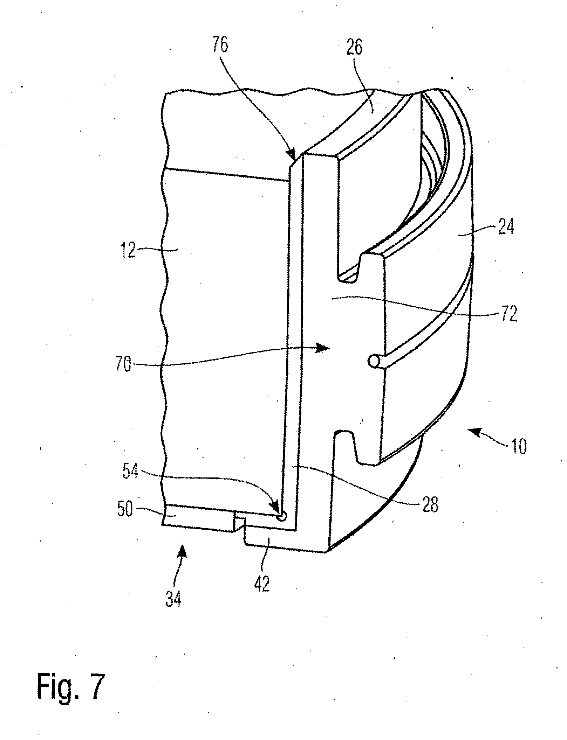

Aus Fig. 7 ist eine weitere Ausführungsform der Erfindung mit einem L-förmigen Profil 70 des Halterings 10 ersichtlich. Das Profil 70 besteht aus einem vertikalen Schenkel 72, an dem radial außen das Formschlussprofil 24 angeformt ist, sowie einem unten von diesem ausgehend und sich radial einwärts erstreckenden horizontalen Schenkel, der dem unteren Endschenkel 42 eines C-Profils entspricht.

Am Übergang zwischen diesen Schenkeln 72 und 42 ist innen eine Nut 54 vorgesehen, die eine Bruchkante einer eingelegten Keramik-Dentalronde 10 vollständig freistellt.

Das L-Profil 72 aus der härteren Komponente 26 ist innen vollständig mit der weicheren Komponente 28 ausgekleidet.

Nachdem das L-Profil 72 nach oben offen ist, ist es möglich, von dort eine Dentalronde 12 in den Haltering 10 einzuführen. Zur Erleichterung des Einführens weist die innere, weichere Komponente 26 eine Einführschräge 76 auf. Ferner erstreckt sich der Haltering 10 nach oben über die Dentalronde 12 hinaus, so dass sie dort sicher geschützt aufgenommen ist.

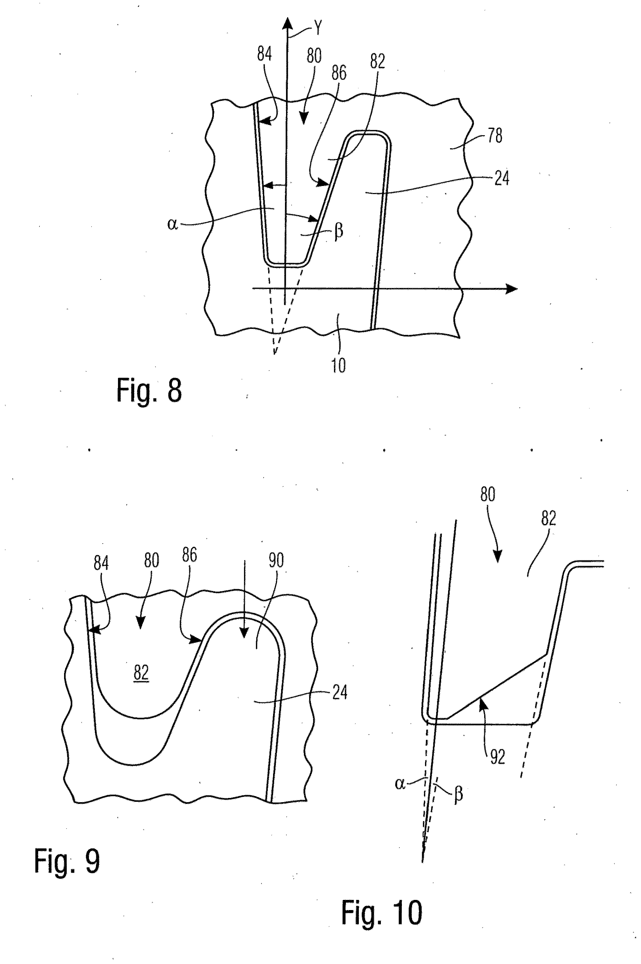

Aus Fig. 8 ist eine Ausschnittansicht eines Dentalronden-Halterings 10, der in Eingriff mit einem partiell dargestellten Fräshalter 78 steht, ersichtlich. Die Lagerung des Halterings 10 in dem Fräshalter 78 erfolgt über ein Formschlussprofil, im dargestellten Ausführungsbeispiel einem Schwalbenschwanzprofil 24.

Die nachstehenden Erläuterungen dienen auch zur Verdeutlichung dessen, dass zahlreiche beliebige Ausgestaltungen eines Formschlussprofils möglich sind, ohne den Bereich der Erfindung zu verlassen.

In an sich bekannter Weise weist das Formschlussprofil eine Nut 80 auf, in die ein Steg 82 des Fräshalters 78 eingreift.

Aus Fig. 8 ist der obere Teil des Schwalbenschwanzprofil 24 und Fräshalters 78 ersichtlich, und es versteht sich, dass hierzu spiegelsymmetrisch der untere Teil ausgebildet ist.

Die Nut 80 hat eine rondenseitige Nutflanke 84 sowie eine fräshalterseitige Nutflanke 86.

Ferner ist in Fig. 8 eine Bewegungsachse Y des Fräshalters 78 eingezeichnet, entlang derer die beiden Fräshalterhälften, also die hier dargestellte obere und die untere, verfahrbar sind.

Im dargestellten Ausführungsbeispiel ist die Bewegungsachse Y parallel zu Achse der Ronde 12 und damit senkrecht zur Erstreckung des Halterings 10. Es versteht sich, dass auch eine Neigung der Bewegungsachse Y zu dieser Senkrechten möglich ist, ohne den Bereich der Erfindung zu verlassen.

Wie aus Fig. 8 ersichtlich ist, besteht ein Winkel **α** zwischen der Achse Y und der rondenseitigen Nutflanke 84, und ein Winkel β zwischen der Achse Y und gegenüber der fräshalterseitigen Nutflanke 86.

Diese Winkel können in weiten Bereichen an die Erfordernisse angepasst werden. Der Winkel **α** kann beispielsweise 1° bis 8° betragen und beträgt im Beispielsfall 5°.

Demgegenüber ist bevorzugt der Winkel β größer, nämlich zwischen 1° und 45°, bevorzugt zwischen 5° und 20° und im dargestellten Ausführungsbeispiel 15°.

Größere Winkel haben den Vorteil, dass Toleranzen besser aufgenommen werden können, während kleinere Winkel zu einer besseren Fixierung mit geringeren Haltekräften führen.

Hier kann in weiten Bereichen eine Anpassung an die Erfordernisse erfolgen.

Gemäß Fig. 8 erstreckt sich der Steg 82 so in die Nut 80 hinein, dass diese vollständig oder nahezu vollständig ausgefüllt ist. Dies ist jedoch nicht unbedingt erforderlich, wie sich unter anderem aus Fig. 9 und 10 und dem zugrunde liegenden Überlegungen ergibt. Nachdem das Schwalbenschwanzprofil 24 sich ebenfalls mit einem oberen Teil und einem unteren Teil erstreckt, und beide Teile des Fräshalters 78 für die Bereitstellung des Formschlusses aufeinander zu bewegt werden, ergibt sich die vertikale Höhenfestlegung durch die Anlage am Ende 90 des Schwalbenschwanzprofils 24, über die dortige horizontale Fläche. Für die Übertragung der Fräskräfte ist eine Abstützung gegen Momente wichtig, die um den Auflagepunkt oder die Auflagelinie wirken wirkt sich die Zweiteiligkeit des Fräshalters 78 und damit des Formschlussprofils, und der so erzeugte lange Lastarm günstig aus und im hier betrachteten oberen Teil muss lediglich ein Teil der Kräfte aufgefangen werden.

Für die Momentenaufnahme ist die großflächige Anlage zwischen dem Steg 82 und der rondenseitigen Nutflanke 84, aber auch der fräshalterseitigen Nutflanke 86 erforderlich. Diese muss jedoch nicht über die ganze Höhe der Nut 80 erfolgen, so dass es ausreicht, wenn der Steg 82 sich nur im oberen Teil in die Nut 80 hinein erstreckt. An dieser Stelle ist die Hebelwirkung am besten.

Eine demgegenüber modifizierte Ausgestaltung ist aus Fig. 10 ersichtlich. Auch hier erstreckt sich der Steg 82 nicht vollständig diese ausfüllend in die Nut 80 hinein. Vielmehr ist eine Einführschräge 92 an der unteren/radial äußeren Stelle des Stegs 82 ausgebildet. In diesem Ausführungsbeispiel sind zudem die Winkel **α** und ß wesentlich kleiner, nämlich **α** = 2° und ß = 4°.

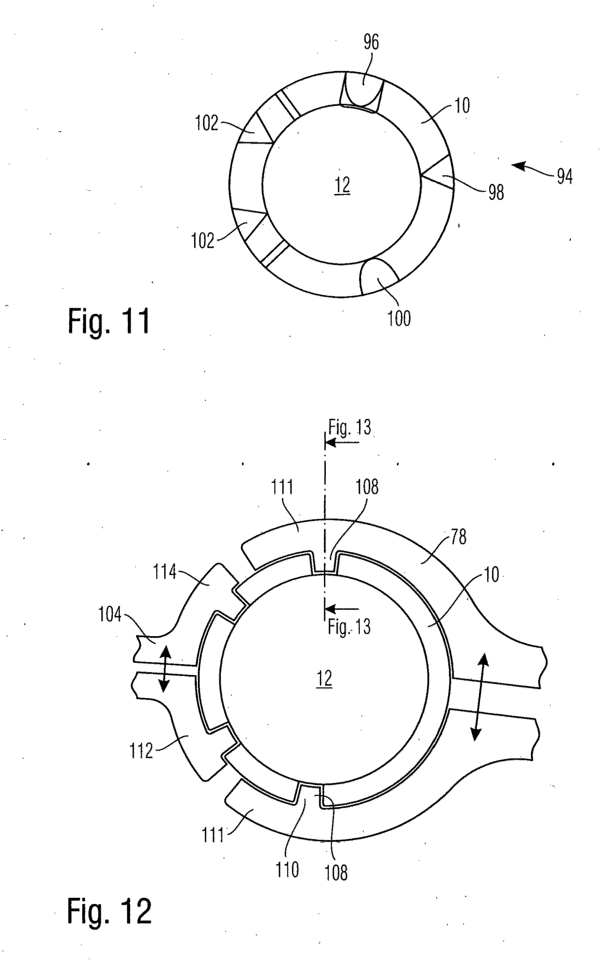

Eine weitere erfindungsgemäße Ausgestaltung eines Dentalronden-Halterings 10 ist aus Fig. 11 schematisch ersichtlich. Diese Ausführung ist nicht Teil der Erfindung. Bei dieser Ausgestaltung ist der Haltering 10 bereichsweise mit Formschlussausnehmungen 94 versehen. Diese können ungleichmäßig um den Haltering 10 verteilt sein und untereinander gleich, aber auch untereinander unterschiedliche Formen aufweisen.

Lediglich beispielhaft ist hier eine quaderförmige Ausnehmung 96, eine Kegel-Ausnehmung 98 und eine Halbkugel-Ausnehmung 100 dargestellt. Anstelle der Kegel-Ausnehmung 98 kann auch eine dreieckförmige Ausnehmung realisiert sein, und es sind beliebige andere Formen möglich .

In dem dargestellten Ausführungsbeispiel erstrecken sich die hier beschriebenen Formschlussprofile über einen Winkel von weniger als 360°, beispielsweise über 240°. Sie sind dafür bestimmt, entsprechende geeignete geformte Zapfen des Fräshalters 78 aufzunehmen.

Der Fräshalter 78 ist bei dieser Lösung bevorzugt nicht in horizontaler Richtung, sondern in vertikaler Richtung teilbar. Ferner ist der in der Darstellung gemäß Fig. 11 linke Bereich der Halterings 10 mit Ausnehmungen 102 vorbereitet, die für den Eingriff über einen Wechsler eines Werkstücksmagazins bestimmt sind.

Für den Wechsel der bearbeiteten Dentalronde 12 erfasst ein hierfür geeigneter Wechsler den Haltering 10 an den Ausnehmungen 102, und der Fräshalter 78 gibt die Dentalronde 12 mit dem Haltering 10 in bearbeiteter Form frei. Der Wechsler entfernt die Ronde 12 aus dem Fräsbereich und legt den Fräshalter 78 eine neue Ronde 12 vor, die bearbeitet werden muss.

In dem dargestellten Ausführungsbeispiel erstreckt sich der Zugriffsbereich des Wechslers über deutlich weniger als 180°, beispielsweise über 120°.

Eine weitere Ausführungsform eines derartigen Fräshalters 78 in Zusammenwirken mit einem Wechsler 104 ist aus Fig. 12 ersichtlich. Diese Ausführung ist nicht Teil der Erfindung. Dort sind zwei trapezförmige Ausnehmungen 108 an unterschiedlichen und zueinander asymmetrischen Winkelpositionen des Halterings 10 vorgesehen. In diese greifen entsprechende Zapfen 110 des Fräshalters 78 ein.

Wie ersichtlich ist, ist auch hier der Fräshalter 78 mit einer vertikalen Trennebene geteilt. Beide Zinken 111 des Fräshalters 78 übergreifen die Dentalronde 12 mit ihrem Haltering 10 um etwa 230°, und der Wechsler 104, der ebenfalls zwei Zinken 112 und 114 mit vertikaler Trennebene hat, hat einen Umschlingungswinkel von etwa 120° gegenüber dem Haltering 10.

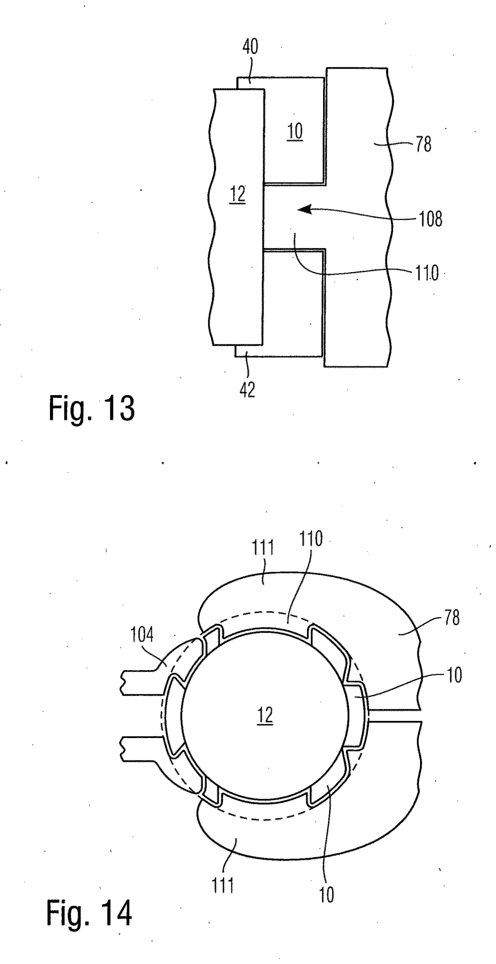

Ein Schnitt durch ein Detail aus Fig. 12 ist aus Fig. 13 ersichtlich. Wie ersichtlich ist, erstreckt sich die Ausnehmung 108 lediglich über den mittleren Teil der Höhe des Halterings 10. Der Zapfen 110 füllt diese aus. Damit ist der erwünschte Formschluss sichergestellt.

Wie ersichtlich ist, ist der Haltering 10 auch bei dieser Ausführungsform im Schnitt C-förmig, so dass er mit seinen Endschenkeln 40 und 42 die Ronde 12 übergreift.

Eine weitere Ausführungsform eines erfindungsgemäßen Dentalronden-Halterings 10 mit zugehörigem Fräshalter 78 ist aus Fig. 14 ersichtlich. Gleiche Bezugszeichen weisen hier wie auch in den weiteren Figuren auf gleiche Teile hin, und auch dieser Haltering 10 ist für die Realisierung eines Wechslers 104 für eine Fräsmaschine mit einem Werkstückmagazin bestimmt.

Es versteht sich, dass die Funktion des Wechslers 104 und/oder des Fräsmaschinenhalters 78 hinsichtlich der Lagerung der Ronde 12 über den Haltering 10 an diesen in beliebiger geeigneter Weise erfolgen kann. Ein Formschluss ist mindestens beim Fräshalter 78 bevorzugt, aber eine kfraftschlüssige Verbindung ist - insbesondere beim Wechsler - ebenso möglich

## Patentansprüche

1. Dentalronden-Haltering, wobei der Haltering (10) aus mindestens zwei Komponenten (26,28) besteht, **dadurch gekennzeichnet, dass** deren härtere (26) die weichere (28) übergreift und dass der Haltering (10) eine horizontal verlaufende, Trennebene aufweist, an welcher ein oberer Teil (36) des Halterings (10) von einem unteren Teil (38) des Halterings (10) trennbar ist, wobei die weichere Komponente (28) aus einem thermoplastischen Elastomer oder einem sonstigen Kunststoff mit einer Shorehärte A kleiner als 80 besteht und der Haltering (10) eine vertikal verlaufende und den Haltering an dieser Stelle unterbrechende Trennfuge oder einen Schlitz (69) aufweist, an welcher der Haltering (10) aufspreizbar ist.

2. Haltering nach Anspruch 1, **dadurch gekennzeichnet, dass** eine radial einwärts weisende Fläche des Halterings (10) von und an der weicheren Komponente (28) gebildet ist.

3. Haltering nach Anspruch 1 oder 2, **dadurch gekennzeichnet, dass** der Haltering (10) einen im wesentlichen C-förmigen oder L-förmigen Querschnitt hat und an seiner Oberseite (32) und an seiner Unterseite (34) je einen oder einen radial einwärts vorspringenden Endschenkel (40,42) des C bzw. des L aufweist.

4. Haltering nach einem der vorhergehenden Ansprüche, **dadurch gekennzeichnet**, das ein Oberseiten-Endschenkel (40) des Halterings (10) an seiner unteren Seite die weichere Komponente (28), insbesondere ein thermoplastisches Elastomer, aufweist, und/oder ein Unterseiten-Endschenkel (42) des Halterings (10) an seiner oberen Seite die weichere Komponente (28) aufweist.

5. Haltering nach einem der vorhergehenden Ansprüche, **dadurch gekennzeichnet, dass** der Haltering (10) im in radialer Richtung verlaufenden Schnitt ein C oder ein L bildet, dessen oberer Endschenkel (40) und/oder unterer Endschenkel (42) sich radial einwärts erstrecken und dessen Mittelschenkel im wesentlichen vertikal verläuft, und dass sich die weichere Komponente (28) als Schicht entlang des C oder des L erstreckt, insbesondere an der radial einwärts weisenden oder inneren Seite

6. Haltering nach einem der vorhergehenden Ansprüche, **dadurch gekennzeichnet, dass** die Teile (36,38) an ihrer auf die Trennebene zu weisenden Seite die weichere Komponente (28) aufweisen.

7. Haltering nach einem der vorhergehenden Ansprüche, **dadurch gekennzeichnet, dass** der Haltering (10) radial außen einen Haltevorsprung aufweist, der mindestens teilweise umlaufend ein Formschlussprofil bildet, insbesondere mit einer Hinderschneidung (22) und/oder, dass die Trennebene durch die Hinterschneidung (22), insbesondere das Formschlussprofil (24), dieses vertikal betrachtet in zwei Teile teilend verläuft.

8. Haltering nach einem der vorhergehenden Ansprüche, **dadurch gekennzeichnet, dass** die weichere Komponente (28) sich lediglich abschnittsweise am Innenumfang des Halterings (10) erstreckt, insbesondere an 3 bis 20 gleichmäßig um den Innenumfang verteilten Bereichen (56) und/oder dass die weichere Komponente (28) sich ringförmig am Innenumfang des Halterings erstreckt.

9. Haltering nach einem der vorhergehenden Ansprüche, **dadurch gekennzeichnet, dass** die weichere Komponente (28) formschlüssig und/oder stoffschlüssig, insbesondere lasergeschweißt, mit der Dentalronde (12), und/oder mittels eines Mehrkomponenten-Spritzgießverfahrens mit der härteren Komponente (26) verbunden ist.

10. Haltering nach einem der vorhergehenden Ansprüche, **dadurch gekennzeichnet, dass** radial einwärts eines Oberseiten-Endschenkels (42) des Halterings (10), und/oder radial einwärts eines Unterseiten-Endschenkel (42) des Halterings (10), sich ein Deckel (50) erstreckt, der den Innenraum des Halterings (10) an der Oberseite (32) abdeckt und/oder, dass der Deckel mit dem Haltering (10), insbesondere mit dessen weicherer Komponente (28), stoffschlüssig verbunden ist und die Verbindungslinie eine Sollbruchstelle (68) bildet und/oder, dass der Deckel (50) mit einer insbesondere aufklappbaren Abziehlasche (62) versehen ist.

11. Haltering nach einem der vorhergehenden Ansprüche, **dadurch gekennzeichnet, dass** die weichere Komponente (28) sich, ggf. abgesehen von Fasen der weicheren Komponente (28), mit einer im wesentlichen gleichbleibenden Schichtstärke erstreckt.

## Claims

1. A dental round blank holding ring, wherein the holding ring (10) consists of at least two components (26, 28), **characterized in that** the harder one (26) of which overlaps the softer one (28) and **in that** the holding ring (10) comprises a horizontally extending separation plane at which an upper part (36) of the holding ring (10) can be separated from a lower part (38) of the holding ring (10), wherein the softer component (28) consists of a thermoplastic elastomer or another plastic material with a Shore A hardness of less than 80, and that the holding ring (10) comprises a vertically extending parting line which interrupts the holding ring at that point or a slit (69) at which the holding ring (10) can be spread open.

2. The holding ring as claimed in claim 1, **characterized in that** a radially inwardly facing surface of the holding ring (10) is formed by and on the softer component (28).

3. The holding ring as claimed in claim 1 or 2, **characterized in that** the holding ring (10) has a substantially C-shaped or L-shaped cross-section and, on its upper side (32) and on its lower side (34), comprises in each case an, or a radially inwardly projecting, end leg (40, 42) of the C or of the L.

4. The holding ring as claimed in any one of the preceding claims, **characterized in that** an upper-side end leg (40) of the holding ring (10) comprises, on its lower side, the softer component (28), in particular a thermoplastic elastomer, and/or a lower-side end leg (42) of the holding ring (10) comprises the softer component (28) on its upper side.

5. The holding ring as claimed in any one of the preceding claims, **characterized in that** the holding ring (10), in the section extending in the radial direction, forms a C or an L, the upper end leg (40) and/or lower end leg (42) of which extend radially inwards and the middle leg of which extends substantially vertically, and that the softer component (28) extends as a layer along the C or the L, in particular on the radially inwardly facing, or inner, side.

6. The holding ring as claimed in any one of the preceding claims, **characterized in that** the parts (36, 38) comprise the softer component (28) on their side facing the separation plane.

7. The holding ring as claimed in any one of the preceding claims, **characterized in that** the holding ring (10) comprises a holding projection radially on the outside, which forms a form-fitting profile at least partially circumferentially, in particular having an undercut (22), and/or that the separation plane through the undercut (22), in particular the form-fitting profile (24), extends dividing same into two parts when considered vertically.

8. The holding ring as claimed in any one of the preceding claims, **characterized in that** the softer component (28) extends only over portions of the inner circumference of the holding ring (10), in particular at 3 to 20 regions (56) uniformly distributed over the inner circumference and/or that the softer component (28) extends annularly on the inner circumference of the holding ring.

9. The holding ring as claimed in any one of the preceding claims, **characterized in that** the softer component (28) is connected in a form-fitting manner and/or integrally bonded manner, in particular is laser welded, to the dental round blank (12), and/or is connected to the harder component (26) by means of a multi-component injection molding process.

10. The holding ring as claimed in any one of the preceding claims, **characterized in that** a cover (50) extends radially inwardly of an upper-side end leg (42) of the holding ring (10) and/or radially inwardly of a lower-side end leg (42) of the holding ring (10), said cover covering the inner space of the holding ring (10) on the upper side (32), and/or that the cover is connected in an integrally bonded manner to the holding ring (10), in particular to the softer component (28) thereof, and the connecting line forms a desired breaking point (68), and/or that the cover (50) is provided with a tear-off strip (62), in particular one which can unfold.

11. The holding ring as claimed in any one of the preceding claims, **characterized in that** the softer component (28) extends, possibly apart from chamfers of the softer component (28), with a substantially uniform layer thickness.

## Revendications

1. Bague de support de flan circulaire dentaire, où la bague de support (10) est constitué d'au moins deux composants (26, 28), **caractérisée en ce que** le composant plus rigide (26) recouvre le composant plus souple (28) et **en ce que** la bague de support (10) présente un plan de séparation s'étendant horizontalement sur lequel une partie supérieure (36) de la bague de support (10) peut être séparée d'une partie inférieure (38) de la bague de support (10), où le composant plus souple (28) est constitué d'un élastomère thermoplastique ou d'un autre plastique ayant une dureté shore A inférieure à 80 et la bague de support (10) présente un joint de séparation ou une fente (69) s'étendant verticalement qui interrompt la bague de support à cet endroit, au niveau duquel la bague de support (10) peut être écartée.

2. Bague de support selon la revendication 1, **caractérisée en ce qu'**une surface de la bague de support (10) orientée radialement vers l'intérieur est formée par et sur le composant plus souple (28).

3. Bague de support selon la revendication 1 ou 2, **caractérisée en ce que** la bague de support (10) présente une section transversale sensiblement en forme de C ou de L et présente sur sa face supérieure (32) et sur sa face inférieure (34) une branche d'extrémité (40, 42) du C ou du L respectivement faisant saillie radialement vers l'intérieur.

4. Bague de support selon l'une des revendications précédentes, **caractérisée en ce qu'**une branche d'extrémité supérieure (40) de la bague de support (10) présente sur sa face inférieure le composant plus souple (28), en particulier un élastomère thermoplastique, et/ou une branche d'extrémité inférieure (42) de la bague de support (10) présente sur sa face supérieure le composant (28) le plus souple.

5. Bague de support selon l'une des revendications précédentes, **caractérisée en ce que** la bague de support (10) forme un C ou un L en section radiale, dont la branche d'extrémité supérieure (40) et/ou la branche d'extrémité inférieure (42) s'étend radialement vers l'intérieur et dont la branche médiane s'étend sensiblement verticalement, et **en ce que** le composant plus souple(28) s'étend sous forme de couche le long du C ou du L, en particulier sur la face orientée radialement vers l'intérieur ou la face intérieure.

6. Bague de support selon l'une des revendications précédentes, **caractérisée en ce que** les parties (36, 38) présentent le composant plus souple (28) sur leur côté orienté vers le plan de séparation.

7. Bague de support selon l'une des revendications précédentes, **caractérisée en ce que** la bague de support (10) présente radialement vers l'extérieur une saillie de retenue qui forme au moins partiellement sur son pourtour un profilé de liaison par la forme, en particulier avec une contre-dépouille (22) et/ou **en ce que** le plan de séparation s'étend à travers la contre-dépouille (22) en particulier le profilé de liaison par la forme (24) en divisant celui-ci , vu verticalement, en deux parties.

8. Bague de support selon l'une des revendications précédentes, **caractérisée en ce que** le composant plus souple (28) s'étend uniquement par sections sur la circonférence intérieure de la bague de support (10), en particulier sur 3 à 20 régions uniformément réparties autour de la circonférence intérieure (56) et/ou **en ce que** le composant plus souple (28) s'étend en anneau sur la circonférence intérieure de la bague de support.

9. Bague de support selon l'une des revendications précédentes, **caractérisée en ce que** le composant le plus souple (28) est relié au flan circulaire dentaire (12) par complémentarité de forme et/ou de matière, en particulier par soudage au laser, et/ou au composant plus rigide (26) au moyen d'un procédé de moulage par injection à plusieurs composants.

10. Bague de support selon l'une des revendications précédentes, **caractérisée en ce que** radialement vers l'intérieur d'une branche d'extrémité supérieure (42) de la bague de support (10), et/ou radialement vers l'intérieur d'une branche d'extrémité inférieure (42) de la bague de support (10), s'étend un couvercle (50) qui recouvre l'intérieur de la bague de support (10) sur le côté supérieur (32) et/ou **en ce que** le couvercle est relié à l'anneau de retenue (10), en particulier à son composant plus souple (28), par une liaison par la matière et la ligne de liaison forme un point de rupture prédéterminé (68) et/ou **en ce que** le couvercle (50) est pourvu d'une languette d'extraction (62), en particulier rabattable.

11. Bague de support selon l'une des revendications précédentes, **caractérisée en ce que** le composant plus souple (28) s'étend avec une épaisseur de couche sensiblement constante, à l'exception d'éventuels chanfreins du composant plus souple (28).
